# EUROPEAN PATENT SPECIFICATION

(11) **EP 2 202 098 B1**
(45) Date of publication and mention of the grant of the patent: **07.11.2018**
(21) Application number: 08832642.6
(22) Date of filing: 18.09.2008
(51) Int. Cl.: B60C 11/04, B60C 5/00, B60C 11/11, B60C 11/12, B60C 11/03

(54) **PNEUMATIC TIRE**
LUFTREIFEN
PNEU

(30) Priority: 18.09.2007 JP 2007240705
(43) Date of publication of application: 30.06.2010
(73) Proprietor: Bridgestone Corporation, Tokyo 104-8340 (JP)
(72) Inventor: OCHI, Naoya, Kodaira-shi Tokyo 187-8531 (JP)
(74) Representative: Oxley, Robin John George
(86) International application number: PCT/JP2008/066863
(87) International publication number: WO 2009/038131

(56) References cited:
- EP-A2- 0 089 308
- DE-A1- 19 962 165
- JP-A- 2001 071 713
- JP-A- 2001 071 713
- JP-A- 2003 146 016
- JP-A- 2005 247 110
- JP-A- 2006 232 151
- JP-A- 2006 297 991
- JP-A- 2008 105 615

## Description

### Technical Field

The present invention relates to a pneumatic tire, in particular, winter tire having tread pattern of blocks with plural number of sipes provided there on, enhancing the ice, snow and wet performance (drainage performance).

### Prior Art

In general, a winter tire with enhanced wet performance and ice performance has plural land portions formed by demarcation by plural circumferential grooves and plural widthwise grooves extending along a tire widthwise direction, wherein the land portion is arranged with plural sipes (see, for example, JP 2006-7797 A).

Attention is drawn to the disclosures of DE 199 62 165, EP 0089 308 and JP 2001 071713.

### Disclosure of the Invention

### (Problems to be solved by the Invention)

In general, such type of tire has a tread pattern of symmetric shape wherein the line of symmetry is an equator of the tire (tread center circumferential line), and for example, conventional tread pattern, as described above, is arranged to be point symmetry to enhance the ice/snow performance and drainage performance.

In such symmetric pattern, same performance is provided for inside and outside the equatorial plane of the tire when the tire is attached onto a rim and mounted to a vehicle. However, the actual contacting state of the tire to the ground is not well considered, when the tire is attached onto a rim and mounted to a vehicle. Therefore, improvement can be made by focusing and considering such actual contacting state.

These days, in addition to the enhancement of the ice/snow performance and drainage performance, enhancement of cornering performance independent with respect to the road surface condition is also required. However, conventional tire having conventional tread pattern can not fully satisfy such requirements.

Accordingly, an object of the present invention is to solve the above-mentioned problems, by providing a pneumatic tire which could enhance the ice, snow and drainage performance, as well as cornering performance.

### (Means for solving the Problems)

The inventors have keenly investigated the tread pattern enhancing the ice, snow and drainage performance, as well as cornering performance, and found that forming one center row in a widthwise direction of a tread to a appropriate shape is beneficial to enhance the cornering performance, which led to the discovery of the present invention. The main configuration of the present invention is as follows.
(1) A pneumatic tire according to claim 1.
   The ground contact surface of the tread herein means a surface area of the tread rubber which is in contact with a flat plate, when the tire is attached onto a appropriate rim and the tire-rim assembly is filled with maximum air pressure, and the assembly is placed on the flat plate with a mass corresponding to a maximum load capability was burdened thereon. The center part in a widthwise direction of a tread herein means the land portion except for the land portion located at each tread end in a tire widthwise direction.
(2) The pneumatic tire of (1), wherein said at least two types of inclined lateral grooves are arranged alternately in the tire circumferential direction.
(3) The pneumatic tire of (1) or (2), wherein the center in widthwise direction of said row of land portion having inclined lateral grooves and circumferential sub groove is located outside the equatorial plane of the tire when the tire is attached onto a rim and mounted to a vehicle.
(4) The pneumatic tire of any of (1) to (3), wherein said row of land portion positioned inside the equatorial plane is row of blocks, when the tire is attached onto a rim and mounted to a vehicle, and a number of blocks of said row of block is in the range of 1.05 to 3.00 times larger than a number of blocks of the other row of blocks.

### (Effect of the Invention)

According to the present invention, it is possible to provide a pneumatic tire which is capable of enhancing the ice, snow and drainage performance, as well as cornering performance due to the provision of the widthwise groove to the center row in a widthwise direction of a tread which contributes to the stable traveling in steering on snow and ice.

### Brief Description of the Drawings

FIG. 1 is a developed view showing a tread pattern of the present invention.
FIG. 2 is a developed view showing the other tread pattern of the present invention.
FIG. 3 is a developed view showing a tread pattern of the conventional art.

### Explanation of Reference Numerals

- 1: Circumferential groove
- 2: Circumferential groove
- 2a: Circumferential groove
- 3: Circumferential groove
- 4, 5, 6, 7: Land portion
- 8, 9, 10: Groove in widthwise direction
- 11, 12: Inclined lateral groove
- 13: Circumferential sub groove
- E: Tread end

### Best Mode for carrying out the Invention

Hereinafter, a pneumatic tire of the present invention will be described with reference to the drawings.

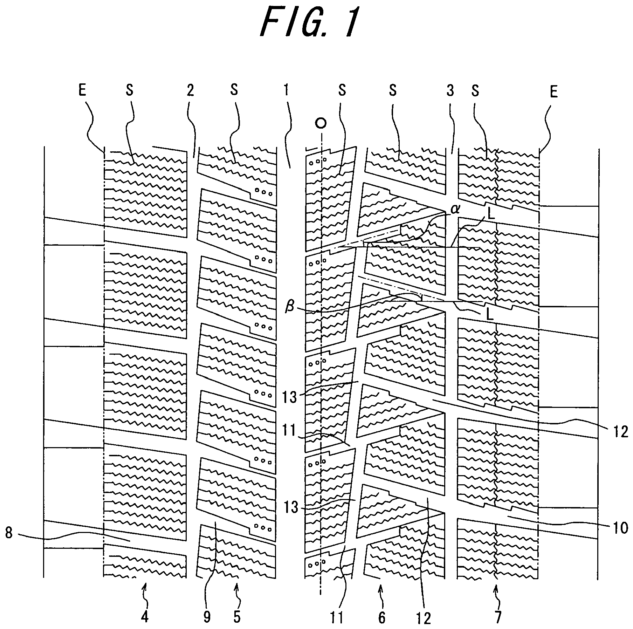

FIG. 1 is a developed view showing a tread pattern of the present invention. Note that, general structure such as a framework of the tire is not shown. Tread pattern as shown in Figure 1 has four rows of land portion 4-7 in the ground contact surface of the tread, wherein the rows of land portions 4-7 are formed by demarcation by plural circumferential grooves extending along a tire circumferential direction i.e. one circumferential groove 1 in broad width and two circumferential groove 2-3 in narrow width comparing to that of the groove 1, and a pair of tread ends E.

The rows of land portion 4-7 are rows of blocks demarcated by widthwise grooves 8-10 extending along a tire widthwise direction, and the rest of the row of land portions 6 is a rib. Demarcation of such rows of land portions and rib provides basic performance necessary for the tire, i.e. stability and drainage performance. Moreover, provision of plural number of sipes to these land portions offers edge function necessary for the running on the ice and snow.

Among said plural rows of land portion 4-7, at least one center row 6 in a widthwise direction of a tread, as illustrated, has at least two types of inclined lateral grooves 11 and 12, each having a different inclination direction with respect to a rotational axis L of the tire (shown as a line parallel to the rotational axis of the tire in the figure), and a circumferential sub groove 13 extending among two inclined lateral grooves 11 and 12 in inclination direction with respect to a equatorial plane O of the tire.

Enhancement of traction performance and braking performance on the ice and snow are dependent on the edge effect due to the end edge of block demarcated by the grooves extending along a tire widthwise direction. However, sideway slippage tends to occur due to the lack of such edge effect when cornering on ice and snow. Therefore, arrangement of two types of inclined lateral grooves 11 and 12, each having a different inclination direction with respect to a rotational axis L of the tire, provides same level of traction performance and braking performance as those of when running straight, caused by the function of edge when the tire is in the slip angle by slightly steering the tire to change the running state from straight running state to cornering running state.

By way of experiment, if the inclination direction if the inclined lateral grooves 11 and 12 are same, desirable performance can be offered when steered in one direction (for example, left direction), but the performance can not be offered when steered in the other direction (for example, right direction). Therefore, arrangement of two types of inclined lateral grooves 11 and 12, each having a different inclination direction is effective to stabilize the behavior of the tire under the slight steering. Preferably, inclined lateral grooves 11 and 12 are arranged alternately in the tire circumferential direction to suppress the difference among both steering direction. Moreover, the alternate arrangement is effective to lessen in performance difference in right and left wheels of tire.

Preferably, range of inclination angle alpha and beta of the inclined lateral grooves 11 and 12 with respect to a rotational axis L of the tire will be; α: 5-45° and β: 5-45°. When the inclination angles α and β are less than 5°, it is difficult to obtain expected performance with the inclined grooves when in the slip angle. On the other hand, when the angles α, β are over 45°, expected performance with the inclined grooves when in the slip angle can be obtained, but traction performance and braking performance in the state of straight running may be deteriorated due to the reduction of edge in widthwise direction.

In the figure shown, two types of inclined lateral grooves 11 and 12 are arranged. However, the inclined lateral grooves can be at least three types of grooves.

Moreover, the row 6 of land portions is separated into block by extending circumferential sub groove 13 among two inclined lateral grooves 11 and 12, and such configuration will enhance running performance on ice and snow due to the moderate rigidity of the row 6 of land portions when running on ice and snow. Concretely, circumferential sub groove 13 is separated by the arrangement of independent inclined groove 11 and inclined groove 12 on the land portion 6, and inclined groove 11 on the both edge of circumferential sub groove 13. The inclined groove 11, arranged on the land portion 6, has a sipe or narrow groove which is opened against the circumferential groove, and the sipe will be closed in the grounded road surface to let the land portion 6 be in the unified form, and thereby the rigidity of the land portion will increase. Moreover, at the same time, when the circumferential groove 13 is extending along the equatorial plane O of the tire, drainage performance will increase, but running performance on the ice and snow will fall due to the decrease of the edge component. Therefore, when the elongated direction of circumferential sub groove 13 is inclined with respect to the equatorial plane O of the tire, the edge component of block will be sufficient to enhance the running performance on ice and snow. Moreover, circumferential groove is basically extended along the circumferential direction which will enhance the cornering performance on ice and snow. Note that, preferable inclination angle of the circumferential sub groove 13 with respect to the equatorial plane O of the tire is in the range of 1-20° when concerning the above functional effect.

It is preferred that, the center in widthwise direction of said row 6 of land portion having inclined lateral grooves 11, 12 and circumferential sub groove 13 is located outside the equatorial plane O of the tire when the tire is attached onto a rim and mounted to a vehicle. The law of land portion 6 having such function as described above is preferably located outside the equatorial plane O of the tire where load is largely burdened to enhance the function of the row of land portions 6.

Moreover, it is preferred that, said row of land portion, i.e. row of land portion 5 in the figure, positioned inside the equatorial plane O is row of blocks, when the tire is attached onto a rim and mounted to a vehicle, and a number of blocks of said row of block is in the range of 1.05 to 3.00 times larger than a number of blocks of the other row of blocks 4 or 7. When the load is burdened outside the equatorial plane O of the tire under the running state of cornering, the load inside the equatorial plane O of the tire will get smaller comparing to the load outside the equatorial plane O of the tire, and a length of ground contact will get shorter accompanying to that. Therefore, by increasing the number of blocks side the equatorial plane O of the tire and increasing the number of blocks per length of ground contact, reduction of edge component of block is inhibited and traction performance and braking performance on ice and snow will be enhanced when the length of ground contact is in the short state.

In practice, when the number of blocks of said row of block is less than 1.05 times the number of blocks of the other row of blocks, inhibition of reduction of edge component of block will be difficult. On the other hand, when the number of blocks of said row of block is larger than 3 times the number of blocks of the other row of blocks, the block itself will be too small and rigidity of row of blocks will decrease which will lead to the deterioration of ice, snow, wet and dry performance, and occurring of partial wear.

### Performance Test

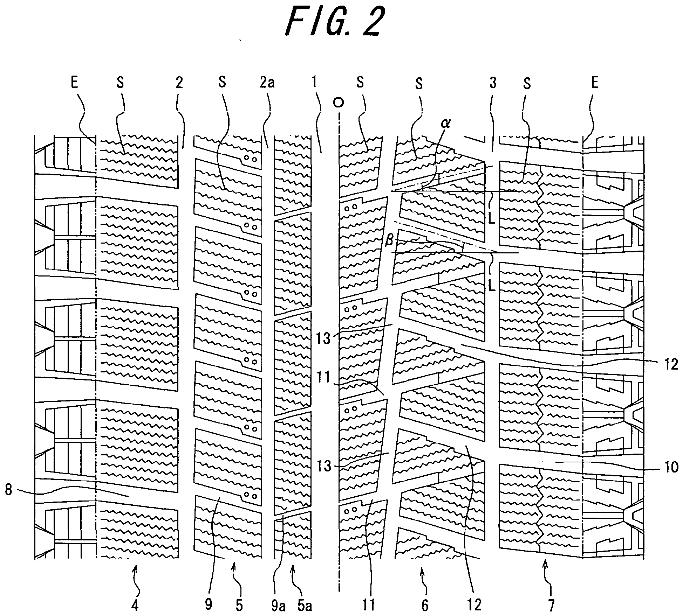

In order to confirm functional advantages of the invention, there were prepared pneumatic radial passenger tires of a tire size of 195/65R15 or 205/65R15 having tread pattern shown in Figs. 1 and 2 with the spec as described in Table 1. The tread pattern shown in Fig. 2 additionally has circumferential groove 2a disposed between circumferential groove 1 and 2, and a row of land portions 5a disposed between circumferential groove 1 and 2a, which composes row of blocks separating row of land portions 5a by the widthwise groove 9a, comparing to the tread pattern shown in Fig. 1.

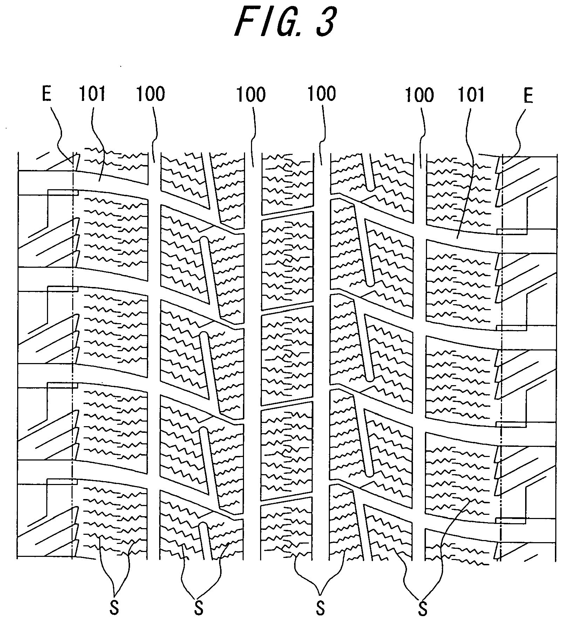

Moreover, in comparison to the above mentioned tires, there were prepared pneumatic radial passenger tires of the same tire size having tread pattern shown in Figs. 3 with the spec as described in Table 1. The tread pattern shown in Fig. 3 is a conventional pattern having blocks demarcated by circumferential grooves 100 in the center area of tread and a lateral groove 101 extending toward the circumferential groove 100,wherein the blocks are provided with plural numbers of sipes S having zigzag shape.

Tires were attached on to an applied rim with the application of prescribed air pressure and mounted to a vehicle to test the performance. The result of test is described in Table 1.

Snow feeling test was conducted by over-all evaluating the braking performance, departing performance, forward performance and cornering performance on the road surface of the test course with treading snow firm by the driver, and the result will be expressed as index ratios of 100 for Conventional tire (comparing with the other tires) which were shown in Table 1. The larger value represents the better snow performance.

Snow braking test was conducted by measuring breaking distance when fully braking from the 40 km/h of running velocity on the road surface with treading snow firm, and the result will be expressed as index ratios of 100 for Conventional tire (comparing with the other tires) which were shown in Table 1. The larger value represents the better breaking performance on snow.

Snow traction test was conducted by measuring acceleration time from starting the vehicle till reaching the distance of 50 m on the road surface with treading snow firm, and the result will be expressed as index ratios of 100 for Conventional tire (comparing with the other tires) which were shown in Table 1. The larger value represents the better traction performance on snow.

Ice feeling test was conducted by over-all evaluating the braking performance, departing performance, forward performance and cornering performance on the iced road surface of the test course by the driver, and the result will be expressed as index ratios of 100 for Conventional tire (comparing with the other tires) which were shown in Table 1. The larger value represents the better ice performance.

Ice braking test was conducted by measuring breaking distance when fully braking from the 40 km/h of running velocity on the iced road surface, and the result will be expressed as index ratios of 100 for Conventional tire (comparing with the other tires) which were shown in Table 1. The larger value represents the better breaking performance on ice.

Wet hydroplaning test was conducted by measuring the critical velocity occurring the hydroplaning on the road surface with 5 mm depth of water, and the result will be expressed as index ratios of 100 for Conventional tire (comparing with the other tires) which were shown in Table 1. The larger value represents the better performance to the hydroplaning resistance.

**Table 1**

| | Example tire 1 (Fig. 1) | Example tire 2 (Fig. 2) | Conventional tire (Fig. 3) |
|---|---|---|---|
| Tire size | 195/65 R 15 | 195/65 R 15 | 195/65 R 15 |
| Negative rate (%) | 28.5 | 30.9 | 28.0 |
| Negative rate: inner side with respect to the vehicle (%) | 30.8 | 34.7 | 28.0 |
| Negative rate: outer side with respect to the vehicle (%) | 28.4 | 27.2 | 28.0 |
| Width of the shoulder block (mm) | 31 | 28 | 28 |
| Width of the circumferential groove 1 (mm) | 11.5 | 9.5 | 6.5 |
| Width of the circumferential groove 2 (mm) | 5 (center in circumferential direction) | 5.5 (center in circumferential direction) | 5 |
| Width of the circumferential groove 3 (mm) | 5 | 5 (=2a) | 5 |
| Inclination angle of inclined lateral groove | α, β : 16° | α: 15°,β : 17° | - |
| Inclination angle of circumferential sub groove (with respect to the equatorial plane of the tire) | 7° | 6.5° | - |
| Block number of rows of land portion5, 5a (block length) | 75 (26.4mm) | 84 (23.6mm) | 50 |
| Block number of other rows of land portion (block length) | 50 (39.6mm) | 56 (35.3mm) | 50 (39.6mm) |
| Snow feeling evaluation | 110 | 112 | 100 |
| Snow braking evaluation | 109 | 108 | 100 |
| Snow traction evaluation | 109 | 109 | 100 |
| Ice feeling evaluation | 107 | 108 | 100 |
| Ice braking evaluation | 108 | 108 | 100 |
| Wet hydroplaning resistance evaluation | 104 | 102 | 100 |

It is apparent from the result as shown in table 1 that all performance was enhanced in Example tires 1 and 2 comparing to the Conventional tire.

## Claims

1. A pneumatic tire having plural rows of land portions (4, 5, 6, 7) in the ground contact surface of the tread, wherein the rows of land portions (4, 5, 6, 7) are formed by demarcation by plural circumferential grooves (1, 2, 2a, 3) extending along a tire circumferential direction and a pair of tread ends (E), wherein:
among said plural rows of land portions (4, 5, 6, 7), at least one center row (6) in a widthwise direction of a tread has at least two types of inclined lateral grooves (11, 12), each having a different inclination direction with respect to a rotational axis (L) of the tire, and a circumferential sub groove (13) extending among two inclined lateral grooves (11, 12) in inclination direction with respect to the tire circumferential direction,
wherein the inclined lateral groove (11) has a sipe or narrow groove which is opened against the circumferential groove (1, 3) and is closed in a grounded road surface.

2. The pneumatic tire of claim 1, wherein said at least two types of inclined lateral grooves (11, 12) are arranged alternately in the tire circumferential direction.

3. The pneumatic tire of claim 1 or claim 2, wherein the center in widthwise direction of said row (6) of land portions having inclined lateral grooves (11, 12) and circumferential sub groove (13) is located outside the equatorial plane (O) of the tire when the tire is attached onto a rim and mounted to a vehicle.

4. The pneumatic tire of any of claims 1 to 3, wherein said row of land portion (5) positioned inside the equatorial plane (O) is a row of blocks, when the tire is attached onto a rim and mounted to a vehicle, and a number of blocks of said row of block is in the range of 1.05 to 3.00 times larger than a number of blocks of the other row of blocks (4, 7).

## Patentansprüche

1. Luftreifen mit mehreren Reihen von Stegabschnitten (4, 5, 6, 7) in der Bodenkontaktfläche der Lauffläche, wobei die Reihen von Stegabschnitten (4, 5, 6, 7) durch Abgrenzung von mehreren Umfangsrillen (1, 2, 2a, 3), die sich entlang einer Reifenumfangsrichtung erstrecken, und von einem Paar Laufflächenenden (E) gebildet werden, wobei:
unter den mehreren Reihen von Stegabschnitten (4, 5, 6, 7), mindestens eine zentrale Reihe (6) in einer Breitenrichtung einer Lauffläche mindestens zwei Arten von schrägen Seitenrillen (11, 12) aufweist, wobei jede eine andere Neigungsrichtung in Bezug auf eine Rotationsachse (L) des Reifens aufweist, und eine Umfangsunterrille (13), die sich unter zwei schrägen Seitenrillen (11, 12) in eine Neigungsrichtung in Bezug auf die Reifenumfangsrichtung erstreckt,
wobei die schräge Seitenrille (11) eine Lamelle oder schmale Rille aufweist, die gegen die Umfangsrille (1, 3) geöffnet und in einer Bodenkontaktfläche geschlossen ist.

2. Luftreifen nach Anspruch 1, wobei die mindestens zwei Arten von schrägen Seitenrillen (11, 12) abwechselnd in der Reifenumfangsrichtung angeordnet sind.

3. Luftreifen nach Anspruch 1 oder Anspruch 2, wobei sich die Mitte in der Breitenrichtung der Reihe (6) von Stegabschnitten, die die schrägen Seitenrillen (11, 12) und die Umfangsunterrille (13) aufweist, ausserhalb der Äquatorialebene (O) des Reifens befindet, wenn der Reifen auf eine Felge aufgezogen und an einem Fahrzeug montiert ist.

4. Luftreifen nach einem der Anspüche 1 bis 3, wobei die Reihe von Stegabschnitten (5), die sich innerhalb der Äquatorialebene (O) befindet, eine Reihe von Blöcken ist, wenn der Reifen auf eine Felge aufgezogen und an einem Fahrzeug montiert ist, und eine Anzahl von Blöcken der Reihe von Blöcken im Bereich von 1,05 bis 3,00 mal größer ist als eine Anzahl von Blöcken der anderen Reihe von Blöcken (4, 7).

## Revendications

1. Pneumatique comportant plusieurs rangées de parties d'appui (4, 5, 6, 7) dans la surface de contact au sol de la bande de roulement ; les rangées de parties d'appui (4, 5, 6, 7) étant formées par démarcation par plusieurs rainures circonférentielles (1, 2, 2a, 3) s'étendant le long d'une direction circonférentielle du pneumatique et une paire d'extrémités de bande de roulement (E), dans lequel :
parmi lesdites plusieurs rangées de parties d'appui (4, 5, 6, 7), au moins une rangée centrale (6) dans une direction de la largeur d'une bande de roulement comporte au moins deux types de rainures latérales inclinées (11, 12), chacune ayant une direction d'inclinaison différente par rapport à un axe rotationnel (L) du pneumatique, et une sous-rainure circonférentielle (13) s'étendant parmi deux rainures latérales inclinées (11, 12) dans une direction d'inclinaison par rapport à la direction circonférentielle du pneumatique,
dans lequel la rainure latérale inclinée (11) comporte une lamelle ou une rainure étroite qui est ouverte contre la rainure circonférentielle (1, 3) et est fermée dans une surface en contact avec la route.

2. Pneumatique selon la revendication 1, dans lequel lesdits au moins deux types de rainures latérales inclinées (11, 12) sont arrangées par alternance dans la direction circonférentielle du pneumatique.

3. Pneumatique selon la revendication 1 ou la revendication 2, dans lequel le centre, dans la direction de largeur de ladite rangée (6) de parties d'appui ayant des rainures latérales inclinées (11, 12) et une sous-rainure circonférentielle (13), est agencé à l'extérieur du plan équatorial (O) du pneumatique lorsque le pneumatique est attaché à une jante et monté sur un véhicule.

4. Pneumatique selon l'une quelconque des revendications 1 à 3, dans lequel ladite rangée de parties d'appui (5) positionnée à l'intérieur du plan équatorial (O) est une rangée de blocs, lorsque le pneumatique est attaché à une jante et monté sur un véhicule, et un nombre de blocs de ladite rangée de blocs est de 1,05 à 3,00 fois supérieur à un nombre de blocs de l'autre rangée de blocs (4,7)
